# EUROPEAN PATENT SPECIFICATION

(11) **EP 3 258 084 B1**
(45) Date of publication and mention of the grant of the patent: **10.04.2019**
(21) Application number: 17171998.2
(22) Date of filing: 19.05.2017
(51) Int. Cl.: F02C 7/32, F02C 7/06

(54) **AN ACCESSORY GEARBOX ASSEMBLY AND A GAS TURBINE ENGINE COMPRISING AN ACCESSORY GEARBOX ASSEMBLY**
HILFSGETRIEBEBAUGRUPPE UND GASTURBINENTRIEBWERK MIT EINER HILFSGETRIEBEBAUGRUPPE
ENSEMBLE D'ENTRAÎNEMENT D'ACCESSOIRES ET MOTEUR DE TURBINE À GAZ COMPRENANT UN ENSEMBLE D'ENTRAÎNEMENT D'ACCESSOIRES

(30) Priority: 13.06.2016 GB 201610234
(43) Date of publication of application: 20.12.2017
(73) Proprietor: Rolls-Royce plc, London SW1E 6AT (GB)
(72) Inventor: Scothern, David, Derby, Derbyshire DE24 8BJ (GB); Edwards, David, Derby, Derbyshire DE24 8BJ (GB)
(74) Representative: Rolls-Royce plc

(56) References cited:
- EP-A1- 2 696 057
- EP-A2- 2 620 622
- US-A1- 2011 309 190
- John Pike: "FM 1-506 Chptr 4 Fuel System", , 1 January 2000 (2000-01-01), XP055464282, Retrieved from the Internet: URL:https://www.globalsecurity.org/militar y/library/policy/army/fm/1-506/Ch4.htm [retrieved on 2018-04-03]

## Description

The present disclosure relates to an accessory gearbox assembly and in particular to an accessory gearbox assembly for a gas turbine engine.

An accessory gearbox assembly generally comprises an accessory gearbox and a plurality of accessories. The accessory gearbox comprises a gear train of spur gears, each of which is arranged to drive a respective one of the accessories. The accessories are either mounted on the front of the accessory gearbox, the back of the accessory gearbox or the front and the back of the accessory gearbox as disclosed by US2011/309190A1, EP2696057A1 and EP2620622A2. The accessories include a low pressure fuel pump, a high pressure fuel pump, a fuel flow governor, an oil pump, a hydraulic pump, a starter motor, an electrical generator, a tachometer, a permanent magnet alternator, e.g. a permanent electrical generator. Thus, the accessory gearbox carries and drives the accessories. The accessory gearbox is driven by a drive shaft which extends generally radially with respect to the axis of the gas turbine engine from an internal gearbox driven by one or more shafts of the gas turbine engine.

The accessory gearbox is mounted on the fan casing of a turbofan gas turbine engine, for example at the bottom of the fan casing, or is mounted on the core engine casing of a turbofan gas turbine engine.

The accessory gearbox also comprises an accessory gearbox casing which encloses the gears of the gear train. In a conventional accessory gearbox the weight, inertia etc. of the accessories is carried by the gearbox casing. In a conventional accessory gearbox each accessory is secured, e.g. bolted, at one end to the accessory gearbox casing and thus each accessory is cantilevered off the accessory gearbox casing and thus each accessory acts as a parasitic mass hung off the accessory gearbox casing. Large accessories, e.g. electrical generators, transmit large loads into the accessory gearbox and accessory gearbox casing in response to movements of the gas turbine engine and/or accessory gearbox, especially following the unlikely event of a release of a fan blade from the fan of a turbofan gas turbine engine.

The accessory gearbox comprises for each accessory a gear and associated gear shaft mounted on the accessory gearbox casing by two bearings, e.g. two roller bearings, splines on the end of each gear shaft to drive the accessory, a seal where the gear shaft passes through the accessory gearbox casing, a shaft of the accessory supported on the accessory casing by two bearings, e.g. two roller bearings, splines on the shaft of the accessory which is arranged to mesh with the splines on the corresponding gear shaft and a seal where the shaft of the accessory passes through the casing of the accessory. Thus, there are a large number of component parts which adds weight and cost to the accessory gearbox assembly and increases the number of component parts which may fail.

The present disclosure seeks to provide an accessory gearbox assembly which reduces or overcomes the above mentioned problem(s).

According to a first aspect of the present disclosure there is provided an accessory gearbox assembly for a gas turbine engine comprising an accessory gearbox and a plurality of accessories arranged to be driven by the accessory gearbox, the accessory gearbox comprising a gear train and an accessory gearbox casing enclosing the gears of the gear train, each accessory is driven by a drive shaft, each accessory has a first end and a second opposite end, each accessory is secured at the first end to the accessory gearbox casing and the second opposite end of at least two of the plurality of accessories are secured to a structural cross member.

A first plurality of accessories may be secured to a first side of the accessory gearbox casing, the drive shafts of the first plurality of accessories are parallel and the second opposite end of at least two of the first plurality of accessories are secured to a first structural cross member.

The at least two of the plurality of accessories may be the largest and/or the heaviest accessories secured to the first side of the accessory gearbox.

The largest and/or the heaviest accessories may be electrical generators.

The second opposite end of more than two of the plurality of accessories may be secured to the structural cross member.

The second opposite end of all the plurality of accessories may be secured to the structural cross member.

A second plurality of accessories may be secured to a second opposite side of the accessory gearbox casing, the drive shafts of the second plurality of accessories are parallel and the second opposite end of at least two of the second plurality of accessories are secured to a second structural cross member.

The second opposite end of more than two of the second plurality of accessories may be secured to the second structural cross member.

The second opposite end of all the second plurality of accessories may be secured to the second structural cross member.

The drive shaft of each accessory may be supported on an associated accessory casing by two bearings, the drive shaft of each accessory has at least one gear, the gear on the drive shaft of each accessory is arranged to mesh with one or more gears on the corresponding drive shaft of other accessories or the gear on the drive shaft of each accessory is arranged to mesh with one or more idler gears which mesh with the gears on the corresponding drive shaft of other accessories, the gear train comprises the gears on the drive shafts of the accessories, and the gears on the drive shafts of the accessories are all enclosed by the accessory gearbox casing of the accessory gearbox.

The accessory gearbox may comprise a gear and an associated drive shaft for each accessory, each drive shaft is supported on an associated accessory casing by two bearings, the gear on the drive shaft of each accessory is arranged to mesh with one or more gears on the corresponding drive shaft of other accessories, and the gears on the drive shafts of the accessories are all enclosed by the accessory gearbox casing of the accessory gearbox.

The accessory gearbox may comprise a gear and an associated gear shaft for each accessory, each gear shaft is mounted on the accessory gearbox casing by two bearings, each gear shaft has splines on an end of each gear shaft to drive the accessory, each accessory has a drive shaft supported on an associated accessory casing by two bearings, the drive shaft of each accessory has splines arranged to mesh with the splines on the corresponding gear shaft, the gear train comprises the gears for the associated accessories, and the gears, gear shafts and bearings for the gear shafts are all enclosed by the accessory gearbox casing of the accessory gearbox.

According to a second aspect of the present disclosure there is provided a gas turbine engine comprising an accessory gearbox assembly comprising an accessory gearbox and a plurality of accessories arranged to be driven by the accessory gearbox, the accessory gearbox comprising a gear train and an accessory gearbox casing enclosing the gears of the gear train, each accessory is driven by a drive shaft, each accessory has a first end and a second opposite end, each accessory is secured at the first end to the accessory gearbox casing and the second opposite end of at least two of the plurality of accessories are secured to a structural cross member.

A first plurality of accessories may be secured to a first side of the accessory gearbox casing, the drive shafts of the first plurality of accessories are parallel and the second opposite end of at least two of the first plurality of accessories are secured to a first structural cross member.

The at least two of the plurality of accessories may be the largest and/or the heaviest accessories secured to the first side of the accessory gearbox.

The largest and/or heaviest accessories may be electrical generators.

The second opposite end of more than two of the plurality of accessories may be secured to the structural cross member.

The second opposite end of all the plurality of accessories may be secured to the structural cross member.

A second plurality of accessories may be secured to a second opposite side of the accessory gearbox casing, the drive shafts of the second plurality of accessories are parallel and the second opposite end of at least two of the second plurality of accessories are secured to a second structural cross member.

The second opposite end of more than two of the second plurality of accessories may be secured to the second structural cross member.

The second opposite end of all the second plurality of accessories may be secured to the second structural cross member.

The drive shaft of each accessory may be supported on an associated accessory casing by two bearings, the drive shaft of each accessory has at least one gear, the gear on the drive shaft of each accessory is arranged to mesh with one or more gears on the corresponding drive shaft of other accessories or the gear on the drive shaft of each accessory is arranged to mesh with one or more idler gears which mesh with the gears on the corresponding drive shaft of other accessories, the gear train comprises the gears on the drive shafts of the accessories, and the gears on the drive shafts of the accessories are all enclosed by the accessory gearbox casing of the accessory gearbox.

The accessory gearbox may comprise a gear and an associated drive shaft for each accessory, each drive shaft is supported on an associated accessory casing by two bearings, the gear on the drive shaft of each accessory is arranged to mesh with one or more gears on the corresponding drive shaft of other accessories and the gears on the drive shafts of the accessories are all enclosed by the accessory gearbox casing of the accessory gearbox.

The accessory gearbox may comprise a gear and an associated gear shaft for each accessory, each gear shaft is mounted on the accessory gearbox casing by two bearings, each gear shaft has splines on an end of each gear shaft to drive the accessory, each accessory has a drive shaft supported on an associated accessory casing by two bearings, the drive shaft of each accessory has splines arranged to mesh with the splines on the corresponding gear shaft, the gear train comprises the gears for the associated accessories, and the gears, gear shafts and bearings for the gear shafts are all enclosed by the accessory gearbox casing of the accessory gearbox.

The gas turbine engine may be an aero gas turbine engine, a marine gas turbine engine, an industrial gas turbine engine or an automotive gas turbine engine.

The aero gas turbine engine may be a turbojet gas turbine engine, a turbo-propeller gas turbine engine, a turbo-shaft gas turbine engine or a turbofan gas turbine engine.

The accessory gearbox may be mounted on a fan casing of the turbofan gas turbine engine or the accessory gearbox may be mounted on a core engine casing of the turbofan gas turbine engine.

The skilled person will appreciate that except where mutually exclusive, a feature described in relation to any one of the above aspects of the invention may be applied mutatis mutandis to any other aspect of the invention.

Embodiments of the invention will now be described by way of example only, with reference to the Figures, in which:
Figure 1 is a sectional side view of a gas turbine engine having an accessory gearbox assembly according to the present disclosure.
Figure 2 is an enlarged view in the direction of arrow A in Figure 1.
Figure 3 is a schematic plan view of an accessory gearbox assembly according to the present disclosure.
Figure 4 is a schematic plan view of a further accessory gearbox assembly according to the present disclosure.
Figure 5 is an enlarged schematic cross-sectional view along line B-B of Figure 3.
Figure 6 is an alternative enlarged schematic cross-sectional view along line B-B of Figure 3.

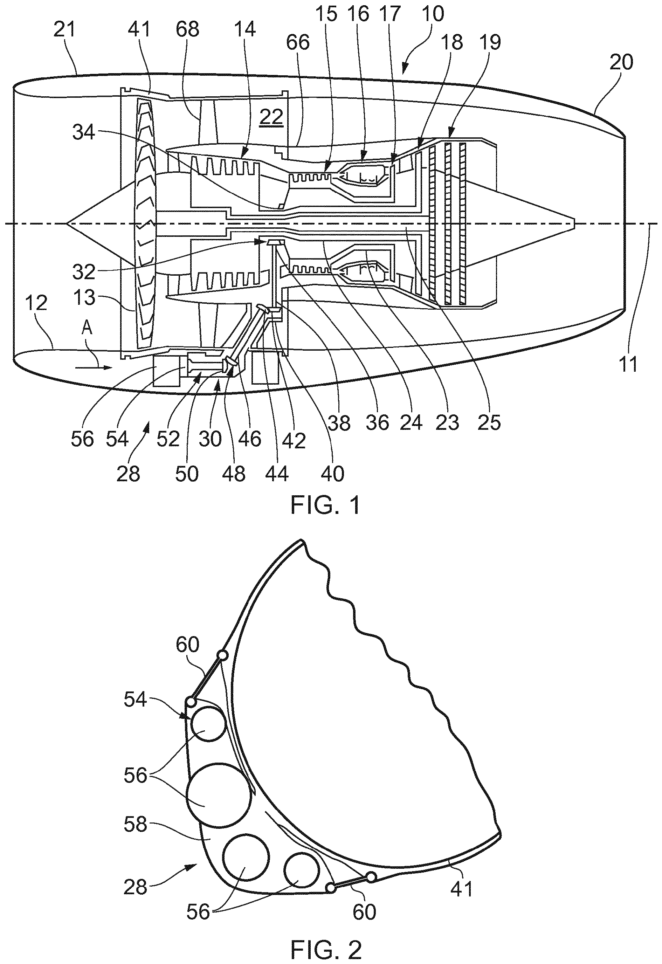

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, and intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shafts 23, 24 and 25 respectively.

The gas turbine engine 10 further comprises an accessory gearbox assembly 28. The accessory gearbox assembly 28 is drivingly connected to the shaft 23 connecting the high pressure compressor 15 and the high pressure turbine 17 via drive means 30. However, in other embodiments the accessory gearbox assembly 28 may be driven by the shaft 24 connecting the intermediate pressure compressor 14 and the intermediate pressure turbine 18 or by the shaft 25 connecting the fan 13 and the low pressure turbine 19. In this arrangement the drive means 30 comprises an internal gearbox 32 provided at the upstream end of the shaft 23. The internal gearbox 32 comprises a bevel gear 34 at the upstream end of the shaft 23 and a bevel gear 36 arranged on the radially inner end of a radial drive shaft 38. The bevel gear 36 on the radial drive shaft 38 is arranged to mesh with the bevel gear 34 on the shaft 23. The radial drive shaft 38 extends through a strut extending across the flow path from the intermediate pressure compressor 14 to the high pressure compressor 15.

An intermediate gearbox, alternatively known as a step aside gearbox, 40 is provided at the radially outer end of the radial drive shaft 38. The intermediate gearbox 40 comprises a bevel gear 42 on the radially outer end of the radial drive shaft 38 and a bevel gear 44 arranged on an inner end of a further drive shaft 46. In this example the further drive shaft 46 is an angled drive shaft. The bevel gear 42 on the radial drive shaft 38 is arranged to mesh with the bevel gear 44 on the further drive shaft 46. The further drive shaft 46 extends through a strut extending across the bypass duct 22. The casing of the intermediate gearbox 40 is mounted on the core engine casing 66. The core engine casing 66 is secured to a fan casing 41 which surrounds the fan 13 by a plurality of radially extending circumferentially spaced fan outlet guide vanes 68. The fan casing 41 is integrated into the structure of the nacelle 21.

A bevel gear 48 is provided on the radially outer end of the further drive shaft 46 and the bevel gear 50 is arranged to mesh with a bevel gear 50 on a final drive shaft 52. The final drive shaft 52 is arranged to provide drive for the accessory gearbox assembly 28. The accessory gearbox assembly 28 comprises an accessory gearbox 54 and a plurality of accessories 56 arranged to be driven by the accessory gearbox 54. The accessory gearbox 54 is mounted on the fan casing 41 and within the nacelle 21.

The accessory gearbox 54 is generally arcuate to correspond with the curvature of the fan casing 41, as shown in figure 2, and the opposite circumferential ends, with respect to the axis of the gas turbine engine 10, of the accessory gearbox 54 are secured by struts 60 extending from the accessory gearbox casing 58 to the fan casing 41. The accessory gearbox 54 may be secured to the fan casing 41 by other struts extending from the accessory gearbox casing 58 to the fan casing 41 between the ends of the accessory gearbox 54.

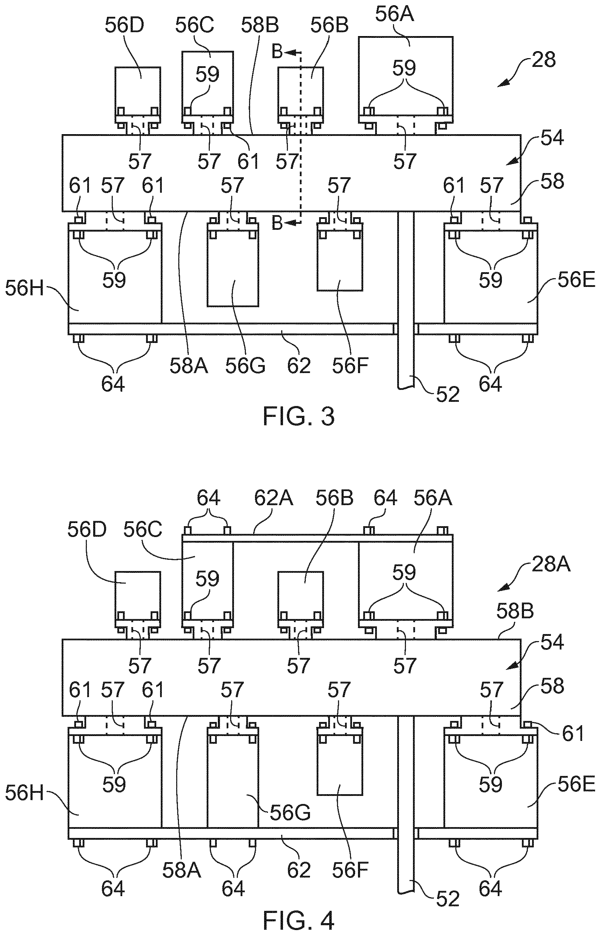

An arrangement of the accessory gearbox assembly 28 is shown more clearly in figure 3. The accessory gearbox assembly 28 comprises a gear train (not shown) and an accessory gearbox casing 58 enclosing the gears of the gear train. Each accessory 56 is driven by a drive shaft 57. Each accessory 56 has a first end and a second opposite end and each accessory 56 is secured at the first end to the accessory gearbox casing 58. In this arrangement the accessories 56 are secured to the accessory gearbox casing 58 by fasteners, e.g. bolts 59 and nuts, but other suitable fasteners, e.g. bolts and threaded inserts or screws, may be used. A plurality of accessories 56 are secured to a first side 58A of the accessory gearbox casing 58 and the second opposite end of at least two of the plurality of accessories 56 are secured to a structural cross member 62. The drive shafts 57 of the accessories 56 secured to the first side 58A of the accessory gearbox casing 58 are parallel. In this arrangement the accessories 56 are secured to the structural cross member 62 by fasteners, e.g. bolts 64 and threaded inserts, but other suitable fasteners, e.g. screws or bolts and nuts, may be used. The structural cross member 62 is spaced from the first side 58A of the accessory gearbox 54 and in this particular example is parallel to the first side 58A of the accessory gearbox 54.

The at least two of the plurality of accessories 56 are the largest and/or the heaviest accessories secured to the first side 58A of the accessory gearbox 54. The largest and/or heaviest accessories 56 may be electrical generators. In some arrangements the second opposite end of more than two of the plurality of accessories 56 are secured to the structural cross member 62 and in other arrangements the second opposite end of all the plurality of accessories 56 may be secured to the structural cross member 62.

A second plurality of accessories 56 are secured to a second opposite side 58B of the accessory gearbox casing 58 and the second opposite end of the second plurality of accessories 56 are unsupported. The drive shafts 57 of the second plurality of accessories 56 secured to the second opposite side 58B of the accessory gearbox casing 58 are parallel. In this arrangement the accessories 56 are secured to the accessory gearbox casing 58 by fasteners, e.g. bolts 59 and nuts, but other suitable fasteners, e.g. bolts and threaded inserts or screws, may be used.

The accessories 56 include a starter motor 56A, an oil pump 56B, a hydraulic pump 56C, a low pressure fuel pump 56D, an aircraft electrical generator 56E, a high pressure fuel pump 56F, an engine electrical generator 56G, a fuel flow governor 56G. Other accessories, for example a tachometer, a permanent magnet electrical generator, a permanent magnet alternator, to provide power to the engine electronic control unit (EEC) are also mounted on and driven by the accessory gearbox 54.

A further arrangement of the accessory gearbox assembly 28A is shown more clearly in figure 4. The accessory gearbox assembly 28 comprises a gear train (not shown) and an accessory gearbox casing 58 enclosing the gears of the gear train. Each accessory 56 is driven by a drive shaft 57. Each accessory 56 has a first end and a second opposite end and each accessory 56 is secured at the first end to the accessory gearbox casing 58. In this arrangement the accessories 56 are secured to the accessory gearbox casing 58 by fasteners, e.g. bolts 59 and nuts, but other suitable fasteners, e.g. bolts and threaded inserts or screws, may be used. A plurality of accessories 56 are secured to a first side 58A of the accessory gearbox casing 58 and the second opposite end of at least two of the plurality of accessories 56 are secured to a structural cross member 62. The drive shafts 57 of the accessories 56 secured to the first side 58A of the accessory gearbox casing 58 are parallel. In this arrangement the accessories 56 are secured to the structural cross member 62 by fasteners, e.g. bolts 64 and threaded inserts, but other suitable fasteners, e.g. screws or bolts and nuts, may be used. The structural cross member 62 is spaced from the first side 58A of the accessory gearbox 54 and in this particular example is parallel to the first side 58A of the accessory gearbox 54.

The at least two of the plurality of accessories 56 are the largest and/or the heaviest accessories secured to the first side 58A of the accessory gearbox 54. The largest and/or heaviest accessories 56 may be electrical generators. In some arrangements the second opposite end of more than two of the plurality of accessories 56 are secured to the structural cross member 62 and in other arrangements the second opposite end of all the plurality of accessories 56 may be secured to the structural cross member 62.

A second plurality of accessories 56 are secured to a second opposite side 58B of the accessory gearbox casing 58 and the second opposite end of at least two of the second plurality of accessories are secured to a second structural cross member 62A. The drive shafts 57 of the second plurality of accessories 56 secured to the second opposite side 58B of the accessory gearbox casing 58 are parallel. In this arrangement the accessories 56 are secured to the accessory gearbox casing 58 by fasteners, e.g. bolts 59 and nuts, but other suitable fasteners, e.g. bolts and threaded inserts or screws, may be used. In this arrangement the accessories 56 are secured to the structural cross member 62A by fasteners, e.g. bolts 64 and threaded inserts, but other suitable fasteners, e.g. screws or bolts and nuts, may be used. In some arrangements the second opposite end of more than two of the second plurality of accessories 56 may be secured to the second structural cross member 62A. In some arrangements the second opposite end of all the second plurality of accessories 56 may be secured to the second structural cross member 62A. The second structural cross member 62A is spaced from the second side 58B of the accessory gearbox 54 and in this particular example is parallel to the second side 58B of the accessory gearbox 54.

The accessories 56 include a starter motor 56A, an oil pump 56B, a hydraulic pump 56C, a low pressure fuel pump 56D, an aircraft electrical generator 56E, a high pressure fuel pump 56F, an engine electrical generator 56G, a fuel flow governor 56G. Other accessories, for example a tachometer, a permanent magnet electrical generator, a permanent magnet alternator, to provide power to the engine electronic control unit (EEC) are also mounted on and driven by the accessory gearbox 54.

The advantage of the present disclosure is that it uses the accessories themselves to increase the stiffness of the accessory gearbox assembly by connecting/linking the free ends of two or more of the accessories by a structural cross member. This ensures that the accessories contribute to the stiffness and strength of the accessory gearbox assembly. The free ends of the accessories are constrained and this reduces the displacements of the accessories and hence reduces the stresses the accessories induce within the accessory gearbox especially during extreme events, such as a fan blade off. This allows the accessory gearbox casing to be reduced in thickness, reducing weight and cost.

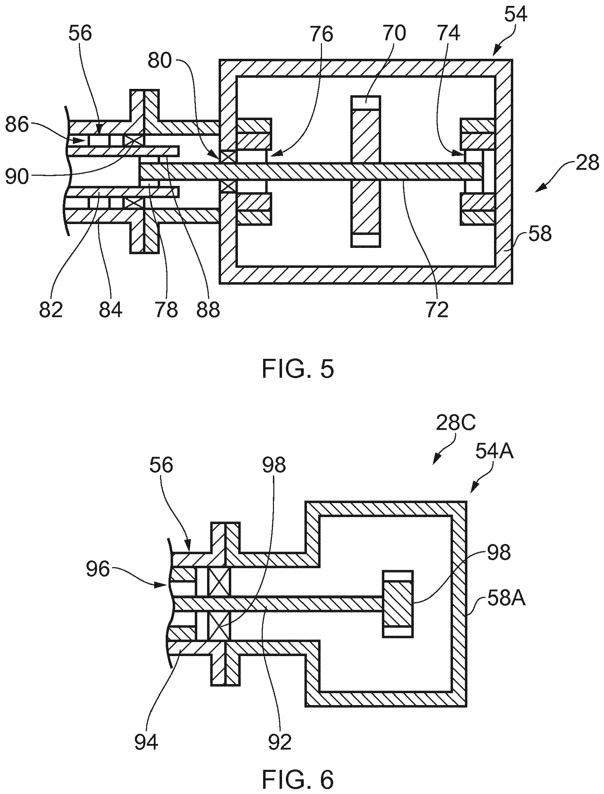

The accessory gearbox assembly 28 in one example, as shown in Figure 5, comprises for each accessory 56 a gear 70 and associated gear shaft 72 mounted on the accessory gearbox casing 58 by two bearings, e.g. two roller bearings, 74 and 76 splines 78 on the end of each gear shaft 72 to drive the accessory 56 and a seal 80 where the gear shaft 72 extends through the accessory gearbox casing 58. A shaft 82 of the accessory 56 is supported on the accessory casing 84 by two bearings, e.g. two roller bearings, only one of which 86 is shown, splines 88 on the shaft 82 of the accessory 56 which are arranged to mesh with the splines 78 on the corresponding gear shaft 72 and a seal 90 where the shaft 82 of the accessory 56 passes through the casing 84 of the accessory 56. The gears 70, which are arranged to drive the accessories 56, are arranged to mesh to form a gear train. The gears 70, gear shafts 72 and bearings 74, 76 for the gear shafts 72 are all enclosed by the accessory gearbox casing 58 of the accessory gearbox 54. There may be idler gears supported on the accessory casing by two bearings, e.g. two roller bearings, between and meshing with the gears 70 which are arranged to drive the accessories 56. The gears 70, gear shafts 72 and bearings 74, 76 for the gear shafts 72, the idler gears and bearings are all enclosed by the accessory gearbox casing 58 of the accessory gearbox 54. In this arrangement the splines 78 extend radially outwardly from the gear shaft 72 and the splines 88 extend radially inwardly from the shaft 82, but the splines 78 may extend radially inwardly from the gear shaft 72 and the splines 88 may extend radially outwardly from the shaft 82.

The accessory gearbox assembly 28C in another example, as shown in Figure 6, comprises a shaft 92 of the accessory 56 supported on the accessory casing 94 by two bearings, e.g. two roller bearings, only one of which 96 is shown, at least one gear 98 on the shaft 92 of the accessory 56 and a seal 98 where the shaft 92 of the accessory 56 extends through the casing 94 of the accessory 56. There may be a seal where the shaft 92 of the accessory 56 passes through the accessory gearbox casing 58A of the accessory gearbox 54A and the gear 98 on the shaft 92 of each accessory 56 is arranged to mesh with one or more gears 98 on the corresponding shaft 92 of other accessories 56 or mesh with one or more idler gears which mesh with the gears 98 on the corresponding shaft 92 of other accessories 56. Thus, the gears 98 mounted on the shafts 92 of the accessories 56 build up the gear train within the accessory gearbox casing 58A as the accessories 56 are mounted onto the accessory gearbox casing 58A. The apertures in the accessory gearbox casing 58A each have a diameter large enough to enable the gear 98 on the shaft 92 of the corresponding accessory 56 to pass there-through. The accessories are designed to support the gear train and to react the gear loads. This arrangement removes the requirement for gear shafts mounted on the accessory gearbox casing and bearings to mount the gear shafts on the accessory gearbox casing and within the gearbox itself. Mounting the drive gears on the accessories effectively reduces the accessory gearbox to a slim and light weight accessory gearbox casing to contain lubricant, oil, and provide the gear train lubrication system and this would enable a significant cost and weight reduction.

Although the present disclosure has referred to the drive shafts of the accessories being arranged parallel at the first and second sides of the accessory gearbox it may be possible to provide one or more accessories which have a drive shaft arranged at another angle, for example an accessory may be provided at an end of the accessory gearbox, or at an arcuate side of the accessory gearbox, and driven for example by a bevel gear and the second end of such an accessory may also be secured to a structural cross member.

Although the present disclosure has been described with the use of removable fasteners to secure the accessories to the structural cross member and the second structural cross member it may be equally possible to the weld, braze or bond one or more of the accessories to the structural member and/or to the second structural member. The structural member and/or the second structural member may comprise a suitable material for example a metal, e.g. steel, titanium, aluminium etc., or a composite material, a fibre reinforced material, e.g. a metal matrix composite.

Although the present disclosure has been described with reference to the accessories in particular positions with respect to the accessory gearbox it is equally possible to provide each of them at any other suitable position.

Although the present disclosure has been described with reference to mounting the accessory gearbox on the fan casing it may be equally possible to mount the accessory gearbox on the core engine casing.

Although the present invention has been described with reference to a turbofan gas turbine engine, it is equally applicable to a turbojet gas turbine engine, a turbo-shaft gas turbine engine and a turbo-propeller gas turbine engine. Although the present invention has been described with reference to an aero gas turbine engine it is equally applicable to a marine gas turbine engine, an industrial gas turbine engine and an automotive gas turbine engine or other type of turbomachine.

It will be understood that the invention is not limited to the embodiments above-described and various modifications and improvements can be made without departing from the concepts described herein.

## Claims

1. An accessory gearbox assembly (28) for a gas turbine engine comprising an accessory gearbox (54) and a plurality of accessories (56A, 56B, 56C, 56D, 56E, 56F, 65G, 56H) arranged to be driven by the accessory gearbox (54), the accessory gearbox (54) comprising a gear train and an accessory gearbox casing (58) enclosing the gears of the gear train, each accessory (56A, 56B, 56C, 56D, 56E, 56F, 56G, 56H) is driven by a drive shaft (57), each accessory (56A, 56B, 56C, 56D, 56E, 56F, 56G, 56H) has a first end and a second opposite end, each accessory (56A, 56B, 56C, 56D, 56E, 56F, 56G, 56H) is secured at the first end to the accessory gearbox casing (58), **characterised in that** the second opposite end of at least two of the plurality of accessories (56E, 56H) are secured to a structural cross member (62).

2. An accessory gearbox assembly as claimed in claim 1 wherein a first plurality of accessories (56E, 56F, 56G, 56H) are secured to a first side (58A) of the accessory gearbox casing (58), the drive shafts (57) of the first plurality of accessories (56E, 56F, 56G, 56H) are parallel and the second opposite end of at least two of the first plurality of accessories (56E, 56H) are secured to a first structural cross member (62).

3. An accessory gearbox assembly as claimed in claim 1 or claim 2 wherein the at least two of the plurality of accessories (56E, 56H) are the largest and/or the heaviest accessories (56) secured to the first side (58A) of the accessory gearbox (54).

4. An accessory gearbox assembly as claimed in claim 3 wherein the largest and/or heaviest accessories (56) are electrical generators (56E).

5. An accessory gearbox assembly as claimed in any of claims 1 to 4 wherein the second opposite end of more than two of the plurality of accessories (56E, 56G, 56H) are secured to the structural cross member (62).

6. An accessory gearbox assembly as claimed in any of claims 1 to 5 wherein the second opposite end of all the plurality of accessories (56) are secured to the structural cross member (62).

7. An accessory gearbox assembly as claimed in any of claims 1 to 6 wherein a second plurality of accessories (56A, 56B, 56C, 56D) are secured to a second opposite side (58B) of the accessory gearbox casing (58), the drive shafts (57) of the second plurality of accessories (56A, 56B, 56C, 56D) are parallel and the second opposite end of at least two of the second plurality of accessories (56A, 56C) are secured to a second structural cross member (62A).

8. An accessory gearbox assembly as claimed in claim 7 wherein the second opposite end of more than two of the second plurality of accessories (56) are secured to the second structural cross member (62A).

9. An accessory gearbox assembly as claimed in claim 7 or claim 8 wherein the second opposite end of all the second plurality of accessories (56) are secured to the second structural cross member (62A).

10. An accessory gearbox assembly as claimed in any of claims 1 to 9 wherein the drive shaft (92) of each accessory (56) is supported on an associated accessory casing (94) by two bearings (96), the drive shaft (92) of each accessory (56) has at least one gear (98), the gear (98) on the drive shaft (92) of each accessory (56) is arranged to mesh with one or more gears (98) on the corresponding drive shaft (92) of other accessories (56) or the gear (98) on the drive shaft (92) of each accessory (56) is arranged to mesh with one or more idler gears which mesh with the gears (98) on the corresponding drive shaft (92) of other accessories (56), the gear train comprises the gears (98) on the drive shafts (92) of the accessories (56), and the gears (98) on the drive shafts (92) of the accessories (56) are all enclosed by the accessory gearbox casing (58A) of the accessory gearbox (54A).

11. An accessory gearbox assembly as claimed in any of claims 1 to 9 wherein the accessory gearbox (54) comprises a gear (70) and an associated gear shaft (72) for each accessory (56), each gear shaft (72) is mounted on the accessory gearbox casing (58) by two bearings (74, 76), each gear shaft (72) has splines (78) on an end of each gear shaft (72) to drive the accessory (56), each accessory (56) has a drive shaft (82) supported on an associated accessory casing (84) by two bearings (86), the drive shaft (82) of each accessory (56) has splines (88) arranged to mesh with the splines (78) on the corresponding gear shaft (72), the gear train comprises the gears (70) for the associated accessories (56), and the gears (70), gear shafts (72) and bearings (74, 76) for the gear shafts (72) are all enclosed by the accessory gearbox casing (58) of the accessory gearbox (54).

12. A gas turbine engine (10) comprising an accessory gearbox assembly (28) as claimed in any of claims 1 to 11.

13. A gas turbine engine as claimed in claim 12 wherein the gas turbine engine (10) is an aero gas turbine engine.

14. A gas turbine engine as claimed in claim 12 or claim 13 wherein the gas turbine engine (10) is a turbofan gas turbine engine.

15. A gas turbine engine as claimed in claim 14 wherein the accessory gearbox (54) is mounted on a fan casing (41) of the turbofan gas turbine engine (10) or the accessory gearbox (54) is mounted on a core engine casing (66) of the turbofan gas turbine engine (10).

## Patentansprüche

1. Hilfsgerätegetriebeanordnung (28) für ein Gasturbinentriebwerk, umfassend ein Hilfsgerätegetriebe (54) und eine Vielzahl von Hilfsgeräten (56A, 56B, 56C, 56D, 56E, 56F, 65G, 56H), die dazu angeordnet sind, durch das Hilfsgerätegetriebe (54) angetrieben zu werden, wobei das Hilfsgerätegetriebe (54) einen Getriebezug und ein Hilfsgerätegetriebegehäuse (58), das die Zahnräder des Getriebezuges umschließt, umfasst, wobei jedes Hilfsgerät (56A, 56B, 56C, 56D, 56E, 56F, 56G, 56H) durch eine Antriebswelle (57) angetrieben wird, wobei jedes Hilfsgerät (56A, 56B, 56C, 56D, 56E, 56F, 56G, 56H) ein erstes Ende und ein zweites entgegengesetztes Ende aufweist, wobei jedes Hilfsgerät (56A, 56B, 56C, 56D, 56E, 56F, 56G, 56H) am ersten Ende an dem Hilfsgerätegetriebegehäuse (58) befestigt ist, **dadurch gekennzeichnet, dass** das zweite entgegengesetzte Ende von mindestens zwei der Vielzahl von Hilfsgeräten (56E, 56H) an einem Strukturquerträger (62) befestigt ist.

2. Hilfsgerätegetriebeanordnung nach Anspruch 1, wobei eine erste Vielzahl von Hilfsgeräten (56E, 56F, 56G, 56H) an einer ersten Seite (58A) des Hilfsgerätegetriebegehäuses (58) befestigt sind, wobei die Antriebswellen (57) der ersten Vielzahl von Hilfsgeräten (56E, 56F, 56G, 56H) parallel sind und das zweite entgegengesetzte Ende von mindestens zwei der ersten Vielzahl von Hilfsgeräten (56E, 56H) an einem ersten Strukturquerträger (62) befestigt ist.

3. Hilfsgerätegetriebeanordnung nach Anspruch 1 oder Anspruch 2, wobei die mindestens zwei der Vielzahl von Hilfsgeräten (56E, 56H) die größten und/oder die schwersten Hilfsgeräte (56) sind, die an der ersten Seite (58A) des Hilfsgerätegetriebes (54) befestigt sind.

4. Hilfsgerätegetriebeanordnung nach Anspruch 3, wobei die größten und/oder schwersten Hilfsgeräte (56) Elektrogeneratoren (56E) sind.

5. Hilfsgerätegetriebeanordnung nach einem der Ansprüche 1 bis 4, wobei das zweite entgegengesetzte Ende von mehr als zwei der Vielzahl von Hilfsgeräten (56E, 56G, 56H) an dem Strukturquerträger (62) befestigt ist.

6. Hilfsgerätegetriebeanordnung nach einem der Ansprüche 1 bis 5, wobei das zweite entgegengesetzte Ende von allen der Vielzahl von Hilfsgeräten (56) an dem Strukturquerträger (62) befestigt ist.

7. Hilfsgerätegetriebeanordnung nach einem der Ansprüche 1 bis 6, wobei eine zweite Vielzahl von Hilfsgeräten (56A, 56B, 56C, 56D) an einer zweiten gegenüberliegenden Seite (58B) des Hilfsgerätegetriebegehäuses (58) befestigt sind, wobei die Antriebswellen (57) der zweiten Vielzahl von Hilfsgeräten (56A, 56B, 56C, 56D) parallel sind und das zweite entgegengesetzte Ende von mindestens zwei der zweiten Vielzahl von Hilfsgeräten (56A, 56C) an einem zweiten Strukturquerträger (62A) befestigt ist.

8. Hilfsgerätegetriebeanordnung nach Anspruch 7, wobei das zweite entgegengesetzte Ende von mehr als zwei der zweiten Vielzahl von Hilfsgeräten (56) an dem zweiten Strukturquerträger (62A) befestigt ist.

9. Hilfsgerätegetriebeanordnung nach Anspruch 7 oder Anspruch 8, wobei das zweite entgegengesetzte Ende von allen der zweiten Vielzahl von Hilfsgeräten (56) an dem zweiten Strukturquerträger (62A) befestigt ist.

10. Hilfsgerätegetriebeanordnung nach einem der Ansprüche 1 bis 9, wobei die Antriebswelle (92) von jedem Hilfsgerät (56) an einem zugehörigen Hilfsgerätegehäuse (94) durch zwei Lager (96) unterstützt ist, wobei die Antriebswelle (92) von jedem Hilfsgerät (56) mindestens ein Zahnrad (98) aufweist, wobei das Zahnrad (98) an der Antriebswelle (92) von jedem Hilfsgerät (56) dazu angeordnet ist, mit einem oder mehreren Zahnrädern (98) an der entsprechenden Antriebswelle (92) von anderen Hilfsgeräten (56) in Eingriff zu stehen, oder das Zahnrad (98) an der Antriebswelle (92) von jedem Hilfsgerät (56) dazu angeordnet ist, mit einem oder mehreren Zwischenzahnrädern in Eingriff zu stehen, die mit den Zahnrädern (98) an der entsprechenden Antriebswelle (92) von anderen Hilfsgeräten (56) in Eingriff stehen, wobei der Getriebezug die Zahnräder (98) an den Antriebswellen (92) der Hilfsgeräte (56) umfasst, und wobei die Zahnräder (98) an den Antriebswellen (92) der Hilfsgeräte (56) gemeinsam durch das Hilfsgerätegetriebegehäuse (58A) des Hilfsgerätegetriebes (54A) umschlossen sind.

11. Hilfsgerätegetriebeanordnung nach einem der Ansprüche 1 bis 9, wobei das Hilfsgerätegetriebe (54) ein Zahnrad (70) und eine zugehörige Getriebewelle (72) für jedes Hilfsgerät (56) umfasst, wobei jede Getriebewelle (72) am Hilfsgerätegetriebegehäuse (58) durch zwei Lager (74, 76) montiert ist, wobei jede Getriebewelle (72) Schiebekeile (78) an einem Ende von jeder Getriebewelle (72) aufweist, um das Hilfsgerät (56) anzutreiben, wobei jedes Hilfsgerät (56) eine Antriebswelle (82) aufweist, die an einem zugehörigen Hilfsgerätegehäuse (84) durch zwei Lager (86) unterstützt ist, wobei die Antriebswelle (82) von jedem Hilfsgerät (56) Schiebekeile (88) aufweist, die dazu angeordnet sind, mit den Schiebekeilen (78) an der entsprechenden Getriebewelle (72) in Eingriff zu stehen, wobei der Getriebezug die Zahnräder (70) für die zugehörigen Hilfsgeräte (56) umfasst, und wobei die Zahnräder (70), Getriebewellen (72) und Lager (74, 76) für die Getriebewellen (72) gemeinsam durch das Hilfsgerätegetriebegehäuse (58) des Hilfsgerätegetriebes (54) umschlossen sind.

12. Gasturbinentriebwerk (10), umfassend eine Hilfsgerätegetriebeanordnung (28) nach einem der Ansprüche 1 bis 11.

13. Gasturbinentriebwerk nach Anspruch 12, wobei das Gasturbinentriebwerk (10) ein Gasturbinenflugtriebwerk ist.

14. Gasturbinentriebwerk nach Anspruch 12 oder Anspruch 13, wobei das Gasturbinentriebwerk (10) ein Turbofangasturbinentriebwerk ist.

15. Gasturbinentriebwerk nach Anspruch 14, wobei das Hilfsgerätegetriebe (54) an einem Fangehäuse (41) des Turbofangasturbinentriebwerks (10) montiert ist oder das Hilfsgerätegetriebe (54) an einem Kerntriebwerkgehäuse (66) des Turbofangasturbinentriebwerks (10) montiert ist.

## Revendications

1. Ensemble d'entraînement d'accessoires (28) pour moteur de turbine à gaz comprenant une boîte d'entraînement d'accessoires (54) et une pluralité d'accessoires (56A, 56B, 56C, 56D, 56E, 56F, 65G, 56H) agencés pour être entraînés par la boîte d'entraînement d'accessoires (54), la boîte d'entraînement d'accessoires (54) comprenant un train d'engrenages et un carter de boîte d'entraînement d'accessoires (58) renfermant les engrenages du train d'engrenages, chaque accessoire (56A, 56B, 56C, 56D, 56E, 56F, 56G, 56H) étant entraîné par un arbre d'entraînement (57), chaque accessoire (56A, 56B, 56C, 56D, 56E, 56F, 56G, 56H) comportant une première extrémité et une seconde extrémité opposée, chaque accessoire (56A, 56B, 56C, 56D, 56E, 56F, 56G, 56H) étant fixé au niveau de la première extrémité au carter de boîte d'entraînement d'accessoires (58), **caractérisé en ce que** la seconde extrémité opposé d'au moins deux de la pluralité d'accessoires (56E, 56H) est fixée à un élément transversal structurel (62).

2. Ensemble d'entraînement d'accessoires selon la revendication 1, une première pluralité d'accessoires (56E, 56F, 56G, 56H) étant fixée à un premier côté (58A) du carter de boîte d'entraînement d'accessoires (58), les arbres d'entraînement (57) de la première pluralité d'accessoires (56E, 56F, 56G, 56H) étant parallèles et la seconde extrémité opposée d'au moins deux de la première pluralité d'accessoires (56E, 56H) étant fixée à un premier élément transversal structurel (62).

3. Ensemble d'entraînement d'accessoires selon la revendication 1 ou 2, lesdits au moins deux de la pluralité d'accessoires (56E, 56H) étant les accessoires les plus grands et/ou les plus lourds (56) fixés au premier côté (58A) de la boîte d'entraînement d'accessoires (54).

4. Ensemble d'entraînement d'accessoires selon la revendication 3, lesdits accessoires les plus grands et/ou les plus lourds (56) étant des générateurs électriques (56E).

5. Ensemble d'entraînement d'accessoires selon l'une quelconque des revendications 1 à 4, la seconde extrémité opposée de plus de deux de la pluralité d'accessoires (56E, 56G, 56H) étant fixée à l'élément transversal structurel (62).

6. Ensemble d'entraînement d'accessoires selon l'une quelconque des revendications 1 à 5, ladite seconde extrémité opposée de l'ensemble de la pluralité d'accessoires (56) étant fixée à l'élément transversal structurel (62).

7. Ensemble d'entraînement d'accessoires selon l'une quelconque des revendications 1 à 6, une seconde pluralité d'accessoires (56A, 56B, 56C, 56D) étant fixée à un second côté opposé (58B) du carter de boîte d'entraînement d'accessoires (58), les arbres d'entraînement (57) de la seconde pluralité d'accessoires (56A, 56B, 56C, 56D) étant parallèle et la seconde extrémité opposée d'au moins deux de la seconde pluralité d'accessoires (56A, 56C) étant fixée à un second élément transversal structurel (62A).

8. Ensemble d'entraînement d'accessoires selon la revendication 7, ladite seconde extrémité opposée de plus de deux de la seconde pluralité d'accessoires (56) étant fixée au second élément transversal structurel (62A).

9. Ensemble d'entraînement d'accessoires selon la revendication 7 ou 8, ladite seconde extrémité opposée de l'ensemble de la seconde pluralité d'accessoires (56) étant fixée au second élément transversal structurel (62A).

10. Ensemble d'entraînement d'accessoires selon l'une quelconque des revendications 1 à 9, ladite arbre d'entraînement (92) de chaque accessoire (56) étant soutenu sur un boîtier d'accessoire associé (94) par deux paliers (96), l'arbre d'entraînement (92) de chaque accessoire (56) comportant au moins un engrenage (98), l'engrenage (98) sur l'arbre d'entraînement (92) de chaque accessoire (56) étant agencé pour s'engrener avec un ou plusieurs engrenages (98) sur l'arbre d'entraînement correspondant (92) d'autres accessoires (56) ou l'engrenage (98) sur l'arbre d'entraînement (92) de chaque accessoire (56) étant agencé pour s'engrener avec un ou plusieurs engrenages intermédiaires qui s'engrènent avec les engrenages (98) sur l'arbre d'entraînement correspondant (92) d'autres accessoires (56), le train d'engrenages comprenant les engrenages (98) sur les arbres d'entraînement (92) des accessoires (56), et les engrenages (98) sur les arbres d'entraînement (92) des accessoires (56) étant tous renfermés par le carter de boîte d'entraînement d'accessoires (58A) de la boîte d'entraînement d'accessoires (54A).

11. Ensemble d'entraînement d'accessoires selon l'une quelconque des revendications 1 à 9, ladite boîte d'entraînement d'accessoires (54) comprenant un engrenage (70) et un arbre de transmission associé (72) pour chaque accessoire (56), chaque arbre de transmission (72) étant monté sur le carter de boîte d'entrainement d'accessoires (58) par les deux paliers (74, 76), chaque arbre de transmission (72) comportant des cannelures (78) sur une extrémité de chaque arbre de transmission (72) pour entraîner l'accessoire (56), chaque accessoire (56) comportant un arbre d'entraînement (82) soutenu sur un boîtier d'accessoire (84) par les deux paliers (86), l'arbre d'entraînement (82) de chaque accessoire (56) comportant des cannelures (88) agencées pour s'engrener avec les cannelures (78) sur l'arbre de transmission correspondant (72), le train d'engrenage comportant les engrenages (70) pour les accessoires associés (56), et les engrenages (70), les arbres de transmission (72) et les paliers (74, 76) pour les arbres de transmission (72) étant tous renfermés par le carter de boîte d'entraînement d'accessoires (58) de la boîte d'entraînement d'accessoires (54).

12. Moteur de turbine à gaz (10) comprenant un ensemble d'entraînement d'accessoires (28) selon l'une quelconque des revendications 1 à 11.

13. Moteur de turbine à gaz selon la revendication 12, ledit moteur de turbine à gaz (10) étant un moteur de turbine à gaz aéronautique.

14. Moteur de turbine à gaz selon la revendication 12 ou 13, ledit moteur de turbine à gaz (10) étant un moteur de turbine à gaz à turbosoufflante.

15. Moteur de turbine à gaz selon la revendication 14, ladite boîte d'entraînement d'accessoires (54) étant montée sur un carter de soufflante (41) du moteur de turbine à gaz à turbosoufflante (10) ou la boîte d'entraînement d'accessoires (54) étant montée sur un carter de moteur central (66) du moteur de turbine à gaz à turbosoufflante (10).
